## Europäisches Patentamt
## European Patent Office
## Office européen des brevets

(19)

(11) Veröffentlichungsnummer: **0 191 172**
**B1**

(12)
# EUROPÄISCHE PATENTSCHRIFT

(45) Veröffentlichungstag der Patentschrift:
**27.09.89**

(51) Int. Cl.⁴: **G 01 N 27/12**

(21) Anmeldenummer: **85115545.7**

(22) Anmeldetag: **06.12.85**

(54) Verfahren zur Sensibilisierung und Stabilisierung des Betriebszustandes von Halbleitergassensoren.

(30) Priorität: **09.02.85  DE 3504499**

(43) Veröffentlichungstag der Anmeldung:
**20.08.86 Patentblatt 86/34**

(45) Bekanntmachung des Hinweises auf die Patenterteilung:
**27.09.89 Patentblatt 89/39**

(84) Benannte Vertragsstaaten:
**DE FR GB NL**

(56) Entgegenhaltungen:
**DE-A- 3 038 155**
**DE-A- 3 116 244**

**PATENT ABSTRACTS OF JAPAN, Band 8, Nr. 153**
**(P-287)[1590], 17. Juli 1984 & JP-A-59 50354**
**PATENT ABSTRACTS OF JAPAN, Band 7, Nr. 172**
**(P-213)[1317], 29. Juli 1983 & JP-A-58 77647**

(73) Patentinhaber: **Drägerwerk Aktiengesellschaft,**
**Moislinger Allee 53-55, D-2400 Lübeck 1 (DE)**

(72) Erfinder: **Matthiessen, Hans, Dipl.-Ing., Heischbrook 22,**
**D-2407 Gross Parin (DE)**

## Beschreibung

Die Erfindung betrifft ein Verfahren zur Sensibilisierung und Stabilisierung des Betriebszustandes von Halbleitergassensoren zur Messung einer Komponente in einem Gasgemisch sowie einen Halbleitergassensor zur Durchführung des Verfahrens.

Gassensoren zur Messung einer Gaskomponente aus einem Gasgemisch auf Halbleiterbasis messen die Gaskonzentration durch die Änderung ihrer Oberflächenleitfähigkeit, welche durch Adsorption der zu messenden Gaskomponente auf der Halbleiteroberfläche zustande kommt. zur Erhöhung ihrer Empfindlichkeit sind den Halbleitersensoren beispielsweise metallische Beimengungen hinzugefügt. Durch spezifische Beimengungen von metallischen Substanzen wird eine gezielte Empfindlichkeit der Halbleitersensoren auf eine zu messende Gaskomponente erreicht. Tritt jedoch diese zu messende Gaskomponente über eine längere Zeit nicht in dem Gasgemisch auf, in welchem sich der Halbleitersensor befindet, so verliert dieser seine Empfindlichkeit. Der Halbleiter muss dann neu aktiviert werden. Dazu wird der Halbleitersensor beispielsweise kurzzeitig einer geringen Menge der zu messenden Gaskomponente ausgesetzt, wodurch seine Empfindlichkeit wieder ansteigt.

Wird ein frischer, noch nicht benutzter Halbleitersensor während seiner Betriebszeit wiederholt der zu messenden Gaskomponente ausgesetzt, kann seine Empfindlichkeit zunächst abnehmen, bis sie einen stabilen Endwert erreicht. Der Halbleitersensor altert. Eine solche Alterung kann bei frischen Halbleitersensoren künstlich durchgeführt werden, bevor sie an ihrem Messort installiert werden.

Ein Verfahren zur Stabilisierung von Halbleitergassensoren der ganannten Art ist aus der DE-OS 31 16 244 bekanntgeworden. Bei dem bekannten Verfahren wird der Halbleitergassensor einmalig in eine Gasatmosphäre eingebracht, die eine Gaskomponente enthält, welche an dem späteren Installationsort des Halbleitergassensors gemessen werden soll.

Ein solches Alterungsverfahren nimmt lediglich einmalig vor der Installation des Halbleitergassensors eine Beaufschlagung des Sensors mit einer zu messenden Gaskomponente von mehr oder weniger hoher Gaskonzentration vorweg. Die Alterung eines Halbleitersensors ist jedoch ein langfristiger Vorgang, so dass sie nicht mit einer einmaligen Durchführung des bekannten Verfahrens abgeschlossen ist. Darüberhinaus kann auch für einen gealterten Sensor ein längerer Zeitraum zwischen seiner Installation und dem erstmaligen Auftreten der zu messenden Gaskomponente vergehen. In der Zwischenzeit verliert er dann weiterhin seine Empfindlichkeit, weil er über einen längeren Zeitraum der zu messenden Gaskomponente nicht ausgesetzt wurde. Ein schon am Messort installierter Halbleitersensor müsste bei längeren Messpausen zu wiederholten Malen der zu messenden Gaskomponente ausgesetzt werden. Ein solches Verfahren wäre jedoch aufwendig, da ein einmal installierter Halbleitergassensor über eine getrennt von der Messstrecke angeordnete Kalibriervorrichtung periodisch mit einer bestimmten Gaskonzentration der zu messenden Gaskomponente beaufschlagt werden müsste.

Die Aufgabe der vorliegenden Erfindung besteht darin, ein Verfahren der genannten Art zur Sensibilisierung und Stabilisierung des Betriebszustandes von Sensoren derart zu verbessern, dass eine gleichbleibende Empfindlichkeit und eine schnelle Reaktion des Halbleitersensors bei Auftreten der zu messenden Gaskomponente sichergestellt ist.

Diese Aufgabe wird erfindungsgemäss dadurch gelöst, dass der Sensor ständig, insbesondere während der Abwesenheit der zu messenden Gaskomponente, einer Stabilisierungskonzentration von festgelegtem Betrag der zu messenden Gaskomponente ausgesetzt ist.

Das erfindungsgemässe Verfahren sorgt für eine stetige und gleichbleibende Aktivierung des Halbleitergassensors während seiner gesamten Bereitschaftszeit, so dass eine zuverlässige Aussage über die Empfindlichkeit des Halbleitergassensors möglich ist. Eine separate, eigenständige Kalibriervorrichtung ist nicht mehr notwendig. Ausserdem erübrigt sich eine vom Hersteller des Halbleitersenors durchzuführende Alterung, welche ihre Wirksamkeit während und nach der Installation des Halbleitersensors an seinem Messort verloren hat.

Vorzugsweise wird die Stabilisierungskonzentration der zu messenden Gaskomponente unterhalb der Ansprechempfindlichkeit des Sensors festgelegt. Es hat sich durch praktische Versuche erwiesen, dass eine solche Konzentration eine optimale Sensibilisierung bewirkt.

In weiterer Ausgestaltung der Erfindung kann zur Erhöhung der Reproduzierbarkeit von Messwerten die Stabilisierungskonzentration gerade oberhalb der Ansprechempfindlichkeit des Sensors liegen, so dass ein kontinuierlicher Grundwert gemessen und als Referenzsignal für die Auswertung der zu messenden Gaskomponente in einem Gasgemisch herangezogen wird.

Zu diesem Zwecke ist vorteilhafterweise die Stabilisierungskonzentration auf eine solche Grösse einzustellen, dass sie den 20sten Teil des Messbereichs der Messvorrichtung beträgt.

Eine zweckmässige Ausgestaltung eines Sensors, welcher nach dem erfindungsgemässen Verfahren stabilisiert und sensibilisiert werden kann, weist ein Sensorgehäuse auf, in welches aus einem Behälter, der die Stabilisierungskonzentration enthält, über eine Diffusionsmembran geringe Mengen der zu messenden Gaskomponente auf den Halbleitersensor gelangen.

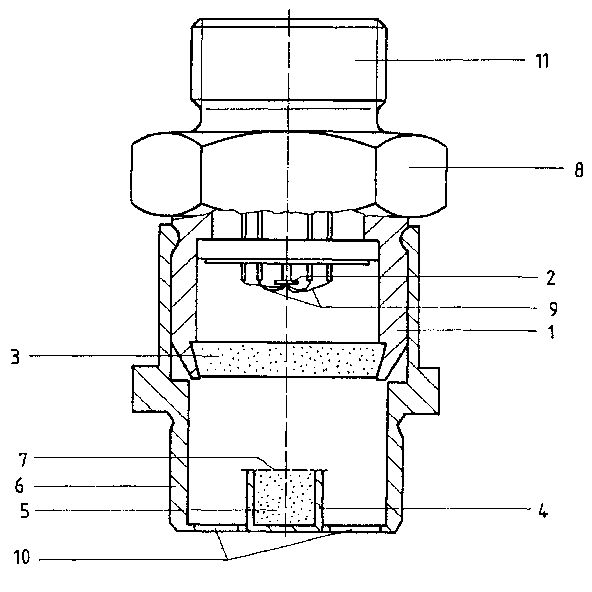

Anhand der Figur wird ein erfindungsgemässer Sensor schematisch dargestellt und näher erläutert.

Das Schnittbild zeigt ein Sensorgehäuse 1, in welchem auf einer Bodenplatte 8 der eigentliche Halbleitersensor 2 montiert ist. Mehrere Leitungen 9 sind aus dem Sensorgehäuse 1 zu einer nicht dargestellten Messvorrichtung geführt. Das Sensorgehäuse 1 ist gegenüber dem Innenraum eines Umgebungsgehäuses 6 mit einer Sintermetallscheibe 3 abgeteilt. In dem Umgebungsgehäuse 6 befindet sich ein Behälter 4, welcher zur Seite des Sensorgehäuses 1 hin mit einer porösen Membran 7 abgeschlossen ist. In dem Innenraum des Behälters 4 befindet sich als Füllung 5 die zu messende Gaskomponente zur Erzeugung der Stabilisierungskonzentration.

Beim Einsatz des erfindungsgemässen Sensors wird das Sensorgehäuse 1 mittels seines an der Platte 8 befestigten Gewindeteiles 11 an eine Messstelle befestigt, wobei die Öffnungen 10 des Umgebungsgehäuses 6 in das zu untersuchende Gasgemisch hineinragen.

Solange aus dem Behälter 4 ständig, insbesondere während der Abwesenheit der zu messenden Gaskomponente, Gas diffundiert, wird der Sensor 2 sensibilisiert und stabilisiert. Tritt eine grössere Menge der zu messenden Gaskomponente in dem Gasgemisch auf, gibt der so sensibilisierte und stabilisierte Sensor 2 ein Signal hoher Amplitude und hoher Flankensteilheit an die Messvorrichtung ab.

## Patentansprüche

1. Verfahren zur Sensibilisierung und Stabilisierung des Betriebszustandes von Halbleitergassensoren zur Messung einer Komponente in einem Gasgemisch, wobei der Sensor (2) ständig, insbesondere während der Abwesenheit der zu messenden Gaskomponente, einer Stabilisierungskonzentration der zu messenden Gaskomponente ausgesetzt ist.

2. Verfahren nach Anspruch 1, dadurch gekennzeichnet, dass die Stabilisierungskonzentration unterhalb der Ansprechempfindlichkeit des Sensors (2) liegt.

3. Verfahren nach Anspruch 1, dadurch gekennzeichnet, dass die Stabilisierungskonzentration gerade oberhalb der Ansprechempfindlichkeit des Sensors liegt und dass der Sensor (2) ein Signal an die Messvorrichtung abgibt, welches als Referenzsignal für die Messung der Gaskomponente dient.

4. Verfahren nach Anspruch 1, dadurch gekennzeichnet, dass die Stabilisierungskonzentration der zu messenden Gaskomponente den 20sten Teil des Messbereiches der Messvorrichtung beträgt.

5. Halbleitergassensor zur Messung einer Gaskomponente in einem Gasgemisch mit einem Sensorgehäuse zur Anwendung des Verfahrens nach Anspruch 1, dadurch gekennzeichnet, dass das Sensorgehäuse (1) durch ein poröses Wandteil (3) von einem Umgebungsgehäuse (6) abgeteilt ist, an welchem ein Behälter (4) zur Aufnahme einer Gaskomponente angeordnet ist, dessen Innenraum (5) über eine poröse Membran (7) mit dem Innenraum des Umgebungsgehäuses (6) verbunden ist.

## Revendications

1. Procédé de sensibilisation et de stabilisation de l'état de fonctionnement de capteurs de gaz semiconducteurs pour la mesure d'un composant dans un mélange gazeux, selon lequel le capteur (2) est exposé en permanence, notamment en l'absence du composant gazeux à mesurer, à une concentration de stabilisation du composant gazeux à mesurer.

2. Procédé selon la revendication 1, caractérisé en ce que la concentration de stabilisation se situe en dessous de la sensibilité de réponse du capteur (2).

3. Procédé selon la revendication 1, caractérisé en ce que la concentration de stabilisation se situe juste au-dessus de la sensibilité de réponse du capteur, et en ce que le capteur (2) délivre au dispositif de mesure un signal qui sert de signal de référence pour la mesure du composants gazeux.

4. Procédé selon la revendication 1, caractérisé en ce que la concentration de stabilisation du composant gazeux à mesurer est égale à un vingtième de la plage de mesure du dispositif de mesure.

5. Capteur de gaz semiconducteur pour la mesure d'un composant gazeux dans un mélange gazeux, muni d'un boîtier de capteur et destiné à la mise en œuvre du procédé selon la revendication 1, caractérisé en ce que le boîter de capteur (1) est séparé par une partie de paroi poreuse (3) d'un boîter environnant (6), sur lequel est disposé un récipient (4) destiné à recevoir un composant gazeux et dont l'espace intérieur (5) est relié par l'intermédiaire d'une membrane poreuse (7) à l'espace intérieur du boîtier environnant (6).

## Claims

1. Method for sensitising and stabilising the operational state of semi-conductor gas sensors for measuring a component in a gas mixture, whereby the sensor (2) is constantly, in particular in the absence of the gas component to be measured, exposed to a stabilising concentration of the gas component to be measured.

2. Method according to claim 1, characterised in that the stabilising concentation lies below the response sensitivity of the sensor (2).

3. Method according to claim 1, characterised in that the stabilising concentration lies just above the response sensitivity of the sensor, in that the sensor (2) emits to the measuring device a signal which serves as reference signal for the measurement of the gas component.

4. Method according to claim 1, characterised in that the stabilising concentration of the gas component to be measured amounts to a 20th part of the measuring area of the measuring device.

5. Semi-conductor gas sensor for measuring a gas component in a gas mixture with a sensor housing, for use in the method according to claim 1, characterised in that the sensor housing (1) is divided by a porous wall part (3) from an ambient housing (6), on which a receptacle (4) is arranged for accommodating a gas component, the interior (5) of which is connected, by way of a porous membrane (7), to the interior of the ambient housing (6).

1/1